Europäisches Patentamt

European Patent Office

Office européen des brevets

(19)

(11) Veröffentlichungsnummer: **0 318 978 B1**

(12) **EUROPÄISCHE PATENTSCHRIFT**

(45) Veröffentlichungstag der Patentschrift: **22.07.92**

(21) Anmeldenummer: **88120015.8**

(22) Anmeldetag: **30.11.88**

(51) Int. Cl.⁵: **F16K 17/36, B60K 15/00**

㊸ **Ventil.**

(30) Priorität: **30.11.87 DE 8715856 U**

(43) Veröffentlichungstag der Anmeldung:
**07.06.89 Patentblatt 89/23**

(45) Bekanntmachung des Hinweises auf die
Patenterteilung:
**22.07.92 Patentblatt 92/30**

(84) Benannte Vertragsstaaten:
**DE ES FR GB IT NL SE**

(56) Entgegenhaltungen:
**EP-A- 0 238 160**
**DE-A- 3 027 970**
**US-A- 4 095 609**

(73) Patentinhaber: **A. KAYSER GMBH & CO. KG**
**Baustrasse 38**
**W-3352 Einbeck(DE)**

(72) Erfinder: **Ammermann, Klaus, Dr.**
**Kleiststrasse 1**
**W-3352 Einbeck(DE)**

(74) Vertreter: **Patentanwälte Deufel, Hertel, Le-**
**wald**
**Isartorplatz 6 Postfach 26 02 47**
**W-8000 München 26(DE)**

# Beschreibung

Die Erfindung betrifft eine Ventilanordnung für ein Kraftfahrzeug.

In Kraftfahrzeugen ist eine Vielzahl von Ventilen angeordnet, die verschiedene Funktionen erfüllen müssen. Beispielsweise gibt es Schwerkraftventile, mit welchen wahlweise Leitungen geöffnet und geschlossen werden. Ein Tank eines Kraftfahrzeuges ist mit einem Be- und Entlüftungsventil versehen, damit zum einen ein Tankvorgang durchgeführt und zum anderen im Tank sich ansammelnde Gase abgeführt werden können.

Der Erfindung liegt die Aufgabe zugrunde, ein verbesserte Ventilanordnung für ein Kraftfahrzeug zu schaffen, die bei geringem Platzbedarf verschiedene Funktionen erfüllen kann.

Diese Aufgabe wird erfindungsgemäß durch eine Ventilanordnung gemäß den Merkmalen des Anspruchs 1 gelöst.

Die erfindungsgemäße Ventilanordnung vereint als ein Gerät verschiedene Ventile, die verschiedene Funktionen erfüllen können. Damit ist nur wenig Platz zum Einbau der Ventilanordnung erforderlich und darüber hinaus treten keine Anschlußprobleme auf, da keine Verbindungsleitungen zwischen einzelnen Ventilen erforderlich sind.

Gemäß einer bevorzugten Ausführungsform sind ein erstes Gehäuse zur Aufnahme einer Membran, eines Tellers und einer Feder, ein Zwischengehäuse zur Aufnahme eines Einsatzes und eines Pilzes, ein zweites Gehäuse zur Aufnahme einer Düse, eines Korbes und einer Kugel und der Behälter miteinander verbunden. Dabei ist vorzugsweise das erste und das zweite Gehäuse mit dem Zwischengehäuse schallgeschweißt und das zweite Gehäuse ist mit dem Behälter reibgeschweißt (rotationsgeschweißt). Damit ergibt sich ein einfacher Aufbau und ein einfacher Zusammenbau der Ventilanordnung.

An dem ersten Gehäuse ist vorzugsweise ein radial oder axial gerichteter Anschlußstutzen angeformt. An dem Behälter zur Aufnahme aufsteigender Flüssigkeit ist vorzugsweise ein axial gerichteter Anschlußstutzen angeformt.

Gemäß einer weiteren bevorzugten Ausführungsform ist an dem Behälter ein Deckel mit wenigstens einem axialen Anschlußstutzen über Reib-(Rotations)schweißung befestigt.

Der Behälter oder das Reservoir zur Aufnahme aufsteigender Flüssigkeit, mit welchem ein Vollaufen der Ventilanordnung mit der Flüssigkeit verhindert wird, ist parallel oder geneigt zur Längsachse der Gehäuse und des Zwischengehäuses angeordnet.

Zur Befestigung der Ventilanordnung sind vorzugsweise an der Außenseite des Behälters senkrecht zu dessen Längsachse abstehende Laschen angeformt.

Ausführungsbeispiele der Erfindung werden nachstehend anhand der Zeichnung näher erläutert. Es zeigt:

Fig. 1    eine erste Ausführungsform einer integrierten Ventilanordnung in Seitenansicht,

Fig. 2    einen Schnitt längs der Linie II-II von Fig. 1,

Fig. 3    einen Schnitt längs der Linie III-III von Fig. 2, und

Fig. 4    eine abgewandelte Ausführungsform eines integrierten Ventils, das zur Hälfte in Längsrichtung geschnitten ist.

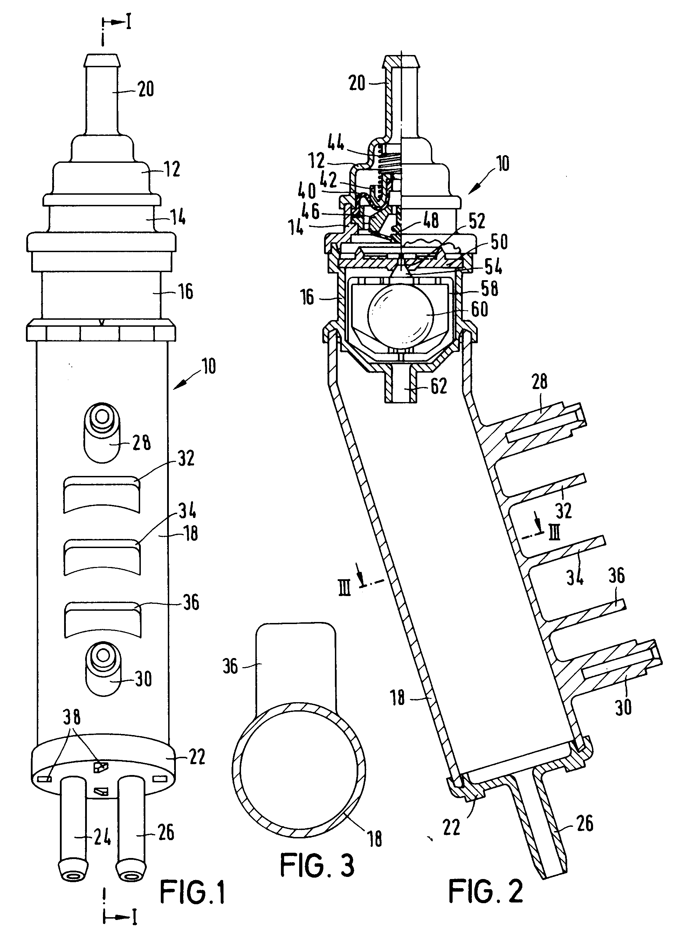

Fig. 1 zeigt in Seitenansicht eine Ventilanordnung 10, die ein oberes Gehäuse 12, ein Zwischengehäuse 14, ein unteres Gehäuse 16 sowie einen Behälter oder Reservoir 18 enthält. An dem oberen Gehäuse 12 ist ein axial gerichteter Anschlußstutzen 20 angeformt. Der Behälter 18 ist über einen Deckel 22 verschlossen, an welchem zwei axial gerichtete Anschlußstutzen 24 und 26 angeordnet sind. Das Zwischengehäuse 14 ist mit dem oberen Gehäuse 12 und dem unteren Gehäuse 16 über Schallschweißung verbunden, während der Behälter 18 mit dem unteren Gehäuse 16 über Reib- bzw. Rotationsschweißung verbunden ist. Der Deckel 22 ist an der Unterseite des Behälters 18 ebenfalls rotationsgeschweißt. An dem Behälter 18 sind mit Sacklochbohrungen versehene Stutzen 28 und 30 angeordnet, die der Befestigung des Ventils dienen. Zwischen den Stutzen 28 und 30 sind senkrecht zur Längsachse des Behälters 18 angeordnete Rippen 32, 34 und 36 angeformt. Der Deckel 22 weist an seiner Außenseite angeformte Keile 38 auf, die während der Rotationsschweißung als Anlage zum Drehen des Deckels verwendet werden.

Aus Fig. 2 ist zu ersehen, daß in dem oberen Gehäuse 12 eine Membran 40, ein Teller 42 sowie eine Schraubenfeder 44 angeordnet sind. In dem Zwischengehäuse 14 ist ein Einsatz 46 und eine pilzförmige Membran (Pilz) 48 aufgenommen. Das untere Gehäuse weist an der Oberseite eine Platte 50 mit einer konischen Düse 52 auf, in welche ein Kegelstumpf 54 eingreift, der an der Oberseite eines Käfigs oder Korbes 56 angeordnet ist. Der Korb 58, in dessen Innerem eine Kugel 60 vorgesehen ist, kann sich in Vertikalrichtung des Gehäuses 16 bewegen, so daß die Düse 52 über den Kegelstumpf 54 verschließbar ist.

Ein an der Unterseite des Gehäuses 16 angeordneter Stutzen 62 ist in das Innere des Behälters 18 gerichtet. Der Behälter 18, der mit seinem Stutzen 26 beispielsweise auf die Entlüftungsleitung eines nicht gezeigten Kraftstofftankes aufgesteckt ist, verhindert ein Vollaufen der Ventilanordnung mit aufsteigendem Kraftstoff.

Die in den Fig. 1 bis 3 gezeigte Ventilanordnung integriert ein Schwerkraftventil mit Rolloverfunktion sowie ein Be- und Entlüftungsventil, beispielsweise für einen Kraftstofftank. Gleichzeitig ist die Ventilanordnung mit einem darunter angeordneten Behälter 18 ausgerüstet, der ein Vollaufen verhindert. Die Ventilanordnung ist insbesondere als Be- und Entlüftungsventil geeignet.

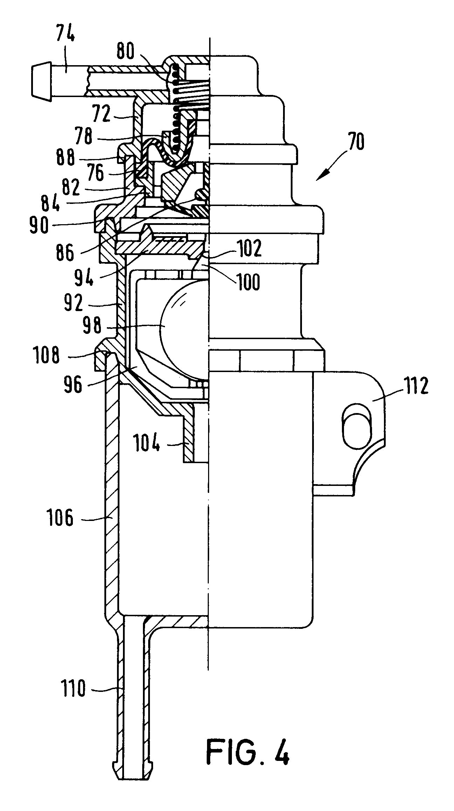

Fig. 4 zeigt eine Ventilanordnung 70, die als Pressure-Release-Ventil ausgebildet ist. In einem oberen Gehäuseteil 72, an welchem ein radial gerichteter Anschlußstutzen 74 angeformt ist, ist eine Membran 76, ein Teller 78 sowie eine Schraubenfeder 80 angeordnet. An einem darunter angeordneten Zwischengehäuse 82 ist ein Einsatz 84 sowie ein Pilz 86 enthalten. Das obere Gehäuse 72 ist mit dem Zwischengehäuse 82 bei 88 schallgeschweißt.

In einem mit dem Zwischengehäuse 82 bei 90 über Schallschweißung verbundenen unteren Gehäuse 92 ist eine Düse 94, ein Korb 96 sowie eine Kugel 98 enthalten. Ein an der Oberseite des Korbes 96 angeformter Kegelstumpf 100 ist innerhalb einer Düsenöffnung 102 angeordnet, so daß diese mit dem Kegelstumpf 100 verschlossen werden kann.

Ein an der Unterseite des Gehäuses 92 angeformter Stutzen 104 ist in das Innere des Behälters 106 gerichtet, der als Reservoir zur Aufnahme von Flüssigkeit dient, damit das darüber angeordnete Ventil nicht vollaufen kann. Die Verbindung des unteren Gehäuses 92 mit dem Behälter 106 erfolgt bei 108 über Rotationsschweißung. Im unteren Ende des Behälters 106 ist ein axial gerichteter, in Nähe der Außenwandung des Behälters 106 angeordneter Anschlußstutzen 110 angeformt. An der Außenseite des Behälters sind Laschen 112 mit Durchgangsöffnungen zur Befestigung der Ventilanordnung 70 angeordnet.

**Patentansprüche**

1. Ventilanordnung für ein Kraftfahrzeug zur Verbindung mit einem Flüssigkeitstank, welche ein Schwerkraftventil (58, 60; 96, 98) mit einem bewegbaren Element (60; 98) zum Verschließen, ein Be- und Entlüftungsventil (40, 46, 48; 76, 84, 86) und einen Behälter (18; 106) zur Aufnahme aufsteigender Flüssigkeit enthält, die sämtlich in einem Gerät angeordnet sind.

2. Ventilanordnung nach Anspruch 1, **dadurch gekennzeichnet,** daß ein erstes Gehäuse (12; 72) zur Aufnahme einer Membran (40; 76), eines Tellers (42; 78) und einer Feder (44; 80), ein Zwischengehäuse (14; 82) zur Aufnahme eines Einsatzes (46, 84) und einer pilzförmig gestalteten Membran (48; 86), ein zweites Gehäuse (16; 92) zur Aufnahme einer Platte mit einer Düse (52; 94), eines Korbes (58; 96) und einer Kugel (60; 98) und der Behälter (18; 106) miteinander verbunden sind.

3. Ventilanordnung nach Anspruch 2, **dadurch gekennzeichnet,** daß das erste (12; 72) und das zweite Gehäuse (16; 92) mit dem Zwischengehäuse (14; 82) durch Schallschweißung und das zweite Gehäuse (16; 92) mit dem Behälter (18; 106) durch Reibschweißung verbunden sind.

4. Ventilanordnung nach Anspruch 2 oder 3, **dadurch gekennzeichnet**, daß an dem ersten Gehäuse ein axial (20) oder radial (74) gerichteter Anschlußstutzen vorgesehen ist.

5. Ventilanordnung nach einem der Ansprüche 1-4, **dadurch gekennzeichnet**, daß an dem Behälter (18; 106) ein axial gerichteter Anschlußstutzen (26; 110) angeformt ist.

6. Ventilanordnung nach einem der Ansprüche 1-4, **dadurch gekennzeichnet**, daß an dem Behälter (18) ein Deckel (22) mit wenigstens einem axialen Anschlußstutzen (24, 26) über Reibschweißung befestigt ist.

7. Ventilanordnung nach einem der Ansprüche 1-6, **dadurch gekennzeichnet**, daß der Behälter parallel (106) oder geneigt (18) zur Längsachse der Gehäuse und des Zwischengehäuses angeordnet ist.

8. Ventilanordnung nach einem der Ansprüche 1-7, **dadurch gekennzeichnet**, daß an der Außenseite des Behälters (18; 106) Laschen oder Stutzen zur Befestigung angeformt sind.

**Claims**

1. Valve for a motor vehicle, which contains a gravity valve (58, 60; 96, 98) with a movable element (60; 98) for closing, an air supply and air removal valve (40, 46, 48; 76, 84, 86) for a liquid tank of the motor vehicle and a container (18; 106) for accommodating rising fluid, all of which are located in one unit.

2. Valve according to Claim 1, characterised in that a first casing (12; 72) for the accommodation of a diaphragm (40; 76), of a plate (42; 78) and of a spring (44; 80), an intermediate casing (14; 82) for the accommodation of an insert (46, 84) and of a diaphragm (48; 86) of mushroom-shaped design, a second casing (16; 92) for the accommodation of a plate with a nozzle (52; 94), of a basket (58; 96) and of a ball (60; 98) and the container (18; 106) are connected together.

3. Valve according to Claim 2, characterised in that the first casing (12; 72) and the second casing (16; 92) are connected by sonic welding to the intermediate casing (14; 82) and the second casing (16; 92) is connected to the container (18; 106) by frictional welding.

4. Valve according to Claim 2 or 3, characterised in that an axially (20) or radially (74) directed connecting mouthpiece is provided on the first casing.

5. Valve according to one of Claims 1-4, characterised in that an axially directed connecting mouthpiece (26; 110) is formed on the container (18; 106).

6. Valve according to one of Claims 1-4, characterised in that a cap (22) with at least one axial connecting mouthpiece (24, 26) is fastened to the container (18) by means of frictional welding.

7. Valve according to one of Claims 1-6, characterised in that the container is located parallel (106) or inclined (18) to the longitudinal axis of the casing and of the intermediate casing.

8. Valve according to one of Claims 1-7, characterised in that lugs or stubs are formed on the outside of the container (18; 106) for fixing purposes.

**Revendications**

1. Agencement de soupapes pour un véhicule automobile servant au raccordement à un réservoir de liquide, lequel agencement comporte une soupape à gravité (58,60;96,98) possédant un élément mobile (60;98) pour l'obturation, une soupape de ventilation et d'évacuation (40,46,48;76,84,86) et un récipient (18;106) pour la réception du liquide montant, tous ces composants étant placés dans un appareil.

2. Soupape selon la revendication 1, caractérisée en ce qu'un premier boîtier (12;72) servant au logement d'une membrane (40;76), d'un plateau (42;78) et d'un ressort (44;80), un boîtier intermédiaire (14;82) servant au logement d'une garniture (46;84) et d'une membrane (48;86) de configuration fongiforme, un deuxième boîtier (16;92) servant au logement d'une plaque comportant un gicleur (52;94), d'un panier (58; 96) et d'une bille (60;98), ainsi que le récipient (18;106) sont raccordée entre eux.

3. Soupape selon la revendication 2, caractérisée en ce que le premier (12;72) et le deuxième (16;92) boîtiers sont raccordés au boîtier intermédiaire (14;82) par soudage aux ultra-sons, le deuxième boîtier (16;92) l'étant au récipient (18;106) par soudage par friction.

4. Soupape selon la revendication 2 ou 3, caractérisée en ce que, contre le premier boîtier est prévu un ajutage dirigé axialement (20) ou radialement (74).

5. Soupape selon l'une des revendications 1-4, caractérisée en ce que sur le récipient (18;106) est conformé un ajutage (26;110) dirigé axialement.

6. Soupape selon l'une des revendications 1-4, caractérisée en ce qu'un couvercle (22) comportant au minimum un ajutage axial (24,26) est fixé sur le récipient (18) par soudage par friction.

7. Soupape selon l'une des revendications 1-6, caractérisée en ce que le récipient est, par rapport à l'axe longitudinal des boîtiers et du boîtier intermédiaire, placé parallèlement (106) ou en oblique (18).

8. Soupape selon l'une des revendications 1-7, caractérisée en ce que des brides ou des manchons de fixation sont conformés sur la face externe du récipient (18;106).

FIG.1

FIG. 3

FIG. 2

FIG. 4